# EUROPEAN PATENT SPECIFICATION

(11) **EP 1 472 320 B1**
(45) Date of publication and mention of the grant of the patent: **13.07.2005**
(21) Application number: 02798616.5
(22) Date of filing: 10.12.2002
(51) Int. Cl.: C09D 175/04, C08G 18/08

(54) **BASECOAT COATING COMPOSITION HAVING LOW VOLATILE ORGANIC CONTENT AND COMPOSITE COATING PREPARED THEREFROM**
BASISLACKZUSAMMENSETZUNG DIE NIEDRIGE WERTE FÜR ORGANISCHE FLÜCHTIGE VERBINDUNGEN HAT UND MEHRSCHICHTLACK
COMPOSITION DE COUCHE D'APPRET A CONTENU ORGANIQUE PEU VOLATIL ET REVETEMENT COMPOSITE PREPARE A PARTIR DE CETTE COMPOSITION

(30) Priority: 17.01.2002 US 52006
(43) Date of publication of application: 03.11.2004
(73) Proprietor: BASF Corporation, Southfield, MI 48034-2442 (US); Crumley, Valerie, Monroe, MI 48162 (US); O'Callaghan, Patricia, Northville, MI 48167 (US); Kandow, Timothy, Howell, MI 48843 (US)
(72) Inventor: CRUMLEY, Valerie, Monroe, MI 48162 (US); O'CALLAGHAN, Patricia, Plymouth, MI 48170 (US); KANDOW, Timothy, Howell, MI 48843 (US)
(74) Representative: Fitzner, Uwe, Dr.
(86) International application number: PCT/US2002/041648
(87) International publication number: WO 2003/062335

(56) References cited:
- US-A- 4 948 829
- US-A- 5 541 251

## Description

### FIELD OF THE INVENTION

The present invention relates to aqueous, crosslinkable basecoat coating compositions with low volatile organic content, particularly automotive topcoat coating compositions. The present invention further relates to composite coating finishes having one or more primer layers and one or more topcoat layers.

### BACKGROUND OF THE INVENTION

Curable, or thermosettable, coating compositions are widely used in the coatings art, particularly for topcoats in the automotive and industrial coatings industry. Basecoat-clearcoat composite coatings are particularly useful as topcoats for which exceptional gloss, depth of color, distinctness of image, or special metallic effects are desired. The automotive industry has made extensive use of these coatings for automotive body panels.

Aqueous coating compositions and powder coating compositions have been increasingly used to meet legal restrictions on organic solvent emissions. In recent years, waterbome basecoat compositions, in particular, have gained prominence. Waterbome basecoat compositions have been prepared by different methods. One method to prepare the basecoat is by emulsion polymerizing an acrylic polymer and combining the emulsion polymer with other materials, such as pigments and a crosslinker. While emulsion polymerization provides advantages, it is important for metallic basecoat colors to achieve the control of the metal flake pigment and/or pearlescent flake pigment need to achieve the desired lustrous color effect. The quality of metallic effect in a coating increases with increasing brightness when the coating is viewed at an angle of 90 degrees to the plane of the surface (the face) and increasing darkness of the coating when viewed at oblique angles (the flop). It is desirable to maximize the difference between the brightness of the face and the darkness of the flop. The difference is called the "travel" of the metallic coating. The coating should also have a uniform metallic effect (i.e., lack of mottle). It is also important for metallic colors, and for all colors, to achieve a smooth, even finish.

The basecoat, as integral layer of a composite coating on a substrate, must also aid in providing the excellent resistance to chipping required of automotive coatings. Further, the basecoat must have excellent adhesion to the any underlying primer layer, as well as to the clearcoat applied over the basecoat, so that the composite coating is strong. Likewise, the applied basecoat compositions must not cause pinholing or popping of the clearcoat because such defects cause poor coating performance as well as resulting in poor appearance. Recent interest in aqueous powder slurry clearcoats has introduced a new compatibility requirement for basecoat compositions. Known basecoat compositions have produced a "mud cracking" appearance when used with powder slurry waterbome clearcoats.

An improved aqueous coating composition was thus needed to address these various problems of basecoat compositions.

Mitsuji et al, U.S. Patents 5,281,655, 5,227,422, and 4,948,829, all of which are incorporated herein by reference, disclose automotive basecoat coating compositions containing polyurethane resin emulsion, a second resin emulsion than can be an acrylic resin, and a crosslinking agent. In Mitsuji '829, the polyurethane resin is prepared by dispersing an isocyanate-functional prepolymer and having the water react with the isocyanate groups to chain-extend the prepolymer. The prepolymer is prepared using an aliphatic diisocyanate, a polyether or polyester diol, a low molecular weight polyol, and a dimethylolalkanoic acid. In Mitsuji '655 and '422, the polyurethane resin is prepared by reacting an aliphatic polyisocyanate, a high molecular weight polyol, a dimethylolalkanoic acid, and, optionally, a chain extender or terminator. The Mitsuji references, however, do not describe how to obtain the desired chip resistance for the composite coating or how to obtain the quality of appearance required for OEM automotive coatings while using little or no organic solvents to aid coalescence.

Hatch et al., U.S. Patent 5,817,735, incorporated herein by reference, discloses an aqueous primer composition for golf balls that includes a polyurethane dispersion and an acrylic dispersion. The primer has a very low content of volatile organic solvent, which is important for minimizing regulated emissions from the coating process. The Hatch patent, however, does not disclose a curable (thermosetting) composition. More importantly, the golf ball primers of the Hatch patent do not provide the properties, such as good metallic appearance and resistance to stone chipping, that are required of an automotive coating. The Hatch reference does not disclose or describe basecoat compositions or suggest how to optimize metallic appearance in metallic basecoat compositions.

It would be desirable, therefore, to have a basecoat composition that provides improved travel for metallic colors and other properties that are important for an automotive basecoat, which additionally can be formulated with a very low content of volatile organic solvent.

### SUMMARY OF THE INVENTION

The present invention provides a thermosetting basecoat composition that includes a polyurethane polymer, an acrylic polymer, and a crosslinking component that is reactive with at least one of the polyurethane polymer and the acrylic polymer. The polyurethane polymer has a glass transition temperature of 0°C or less. The acrylic polymer has a glass transition temperature that is at least about 20°C higher than the glass transition temperature of polyurethane resin. The polyurethane and acrylic polymers are preferably dispersed or emulsified in an aqueous medium. As used herein, "emulsion" or "dispersion" will each be used to refer both to dispersions and emulsions. In addition, the basecoat composition has a pigment to binder ratio of at least about 0.5.

The basecoat composition of the invention produces basecoats with excellent smoothness and metallic effect without the need to add coalescing solvents.

The invention further provides a composite coating having as a basecoat layer a cured layer of the basecoat coating composition of the invention and having at least one clearcoat layer over the basecoat layer. In a preferred embodiment, the composite coating has a third, underlying layer that is obtained by applying and curing an aqueous primer composition comprising a dispersed polyurethane polymer having a glass transition temperature of about 0°C or less; a dispersed acrylic polymer having a glass transition temperature that is at least about 20°C higher than the glass transition temperature of the polyurethane polymer; and a crosslinking component that is reactive with at least one of the polyurethane polymer and the acrylic polymer.

The composite coating of the invention has excellent smoothness, even without use of organic cosolvent.

### Detailed Description of the Invention

The basecoat composition preferably contains from about 10% by nonvolatile weight to about 50% by nonvolatile weight of the polyurethane polymer, based on the combined nonvolatile weights of the polyurethane polymer, the acrylic polymer, and the crosslinking component. The polyurethane polymer of the invention has a glass transition temperature of about 0°C or less, preferably about -20°C or less, and more preferably about -30°C or less. The glass transition temperature of the polyurethane is preferably in the range of from about -80°C to about 0°C, more preferably from about -65°C to about -10°C, still more preferably from about -65°C to about -30°C, and even still more preferably from about - 60°C to about -35°C.

The weight average molecular weight of the polyurethane is preferably from about 15,000 to about 60,000, more preferably from about 15,000 to about 40,000, and even more preferably from about 20,000 to about 35,000.

Polyurethanes are prepared by reaction of at least one polyisocyanate and at least one polyol. The reactants used to prepare the polyurethane are selected and apportioned to provide the desired glass transition temperature. Suitable polyisocyanates include, without limitation, aliphatic linear and cyclic polyisocyanates, preferably having up to 18 carbon atoms, and substituted and unsubstituted aromatic polyisocyanates. Illustrative examples include, without limitation, ethylene diisocyanate, 1,2-diisocyanatopropane, 1,3-diisocyanatopropane, 1,4-butylene diisocyanate, lysine diisocyanate, 1,4-methylene bis(cyclohexyl isocyanate), isophorone diisocyanate, toluene diisocyanates (e.g., 2,4-toluene diisocyanate and 2,6-toluene diisocyanate) diphenylmethane 4,4'-diisocyanate, methylenebis-4,4'-isocyanatocyclohexane, 1,6-hexamethylene diisocyanate, p-phenylene diisocyanate, tetramethyl xylene diisocyanate, meta-xylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, and combinations of two or more of these. Biurets, allophonates, isocyanurates, carbodiimides, and other such modifications of these isocyanates can also be used as the polyisocyanates. In a preferred embodiment, the polyisocyanates include methylenebis-4,4'-isocyanatocyclohexane, 1,6-hexamethylene diisocyanate, 1,12-dodecamethylene diisocyanate, and combinations thereof. It is particularly preferred to use at least one α,ω-alkylene diisocyanate having four or more carbons, preferably 6 or more carbons, in the alkylene group. Combinations of two or more polyisocyanates in which one of the polyisocyanates is 1,6-hexamethylene diisocyanate are especially preferred.

The polyol or polyols used to prepare the polyurethane polymer can be selected from any of the polyols known to be useful in preparing polyurethanes, including, without limitation, 1,4-butanediol, 1,3-butanediol, 2,3-butanediol, 1,6-hexanediol, neopentyl glycol, 1,3-propanediol, 1,5-pentanediol, 1,6-hexanediol, 1,9-nonanediol, ethylene glycol, diethylene glycol, triethylene glycol and tetraethylene glycol, propylene glycol, dipropylene glycol, glycerol, cyclohexanedimethanols, 2-methyl-2-ethyl-1,3-propanediol, 2-ethyl-1,3-hexanediol, thiodiglycol, 2,2,4-tnmethyl-1,3-pentanediol, cyclohexanediols, trimethylolpropane, trimethylolethane, and glycerin; polyester polyols such as the reaction products of any of the foregoing alcohols and combinations thereof with one or more polycarboxylic acids selected from malonic acid, maleic acid, succinic acid, glutaric acid adipic acid, azelaic acid, anhydrides thereof, and combinations thereof; polyether polyols, such as polyethylene glycols and polypropylene glycols; and combinations of such polyols. Polyols having two hydroxyl groups are preferred. The polyurethane is preferably prepared using one or more polyester polyols. In a preferred embodiment, the polyester polyol is the reaction product of a mixture that comprises neopentyl glycol and adipic acid.

While it is possible to prepare a nonionic dispersion of the polyurethane, the polyurethane dispersion is preferably anionic. Acid-functional polyurethanes that can be salted to form anionic dispersions or emulsions may be synthesized by including a monomer having acid functionality, such as, without limitation, dialkylpropionic acids including dimethylolpropionic acid, and alkali metal salts of amino acids such as taurine, methyl taurine, 6-amino caproic acid, glycine, sulfanilic acid, diamino benzoic acid, ornithine, lysine and 1:1 adducts of sultones, such as propane sultone or butane sultone, with diamines, such as ethylene diamine, hydrazine, or 1,6-hexamethylene diamine. The hydroxyl groups react to form the urethane linkages while the acid group remains unreacted in the polyurethane polymerization.

Suitable polyurethane polymers can be prepared by any of the known methods. In one method for preparing polyurethane polymers, the polyisocyanate component is reacted with an excess of equivalents of the polyol component to form a hydroxyl-functional polyurethane polymer. Alternatively, an excess of equivalents of the polyisocyanate component can be reacted with the polyol component to form an isocyanate-functional prepolymer. The prepolymer can then be reacted further in different ways. First, the prepolymer can be reacted with a mono-functional alcohol or amine to provide a non-functional polyurethane polymer. Examples of mono-functional alcohols and amines that may be used include polyethylene oxide compounds having one terminal hydroxyl group, lower mono-functional alcohols having up to 12 carbon atoms, amino alcohols such as dimethylethanolamine, and secondary amines such as diethylamine and dimethylamine. Secondly, the prepolymer can be reacted with a polyfunctional polyol, polyamine, or amino alcohol compound to provide reactive hydrogen functionality. Examples of such polyfunctional compounds include, without limitation, the polyols already mentioned above, including triols such as trimethylolpropane; polyamines such as ethylenediamine, butylamine, and propylamine; and amino alcohols, such as diethanolamine. Finally, the prepolymer can be chain extended by the water during emulsification or dispersion of the prepolymer in the aqueous medium. The prepolymer is mixed with the water after or during neutralization.

The polyurethane may be polymerized without solvent. Solvent may be included, however, if necessary, when the polyurethane or prepolymer product is of a high viscosity. If solvent is used, the solvent may be removed, partially or completely, by distillation, preferably after the polyurethane is dispersed in the water. The polyurethane may have nonionic hydrophilic groups, such as polyethylene oxide groups, that serve to stabilize the dispersed polyurethane polymer. In a preferred embodiment, however, the polyurethane polymer is prepared with pendant acid groups as described above, and the acid groups are partially or fully salted with an alkali, such as sodium or potassium, or with a base, such as an amine, before or during dispersion of the polyurethane polymer or prepolymer in water.

The basecoat coating composition further includes an acrylic polymer. The basecoat composition preferably contains from about 25% by nonvolatile weight to about 75% by nonvolatile weight of the acrylic polymer, based on the combined nonvolatile weights of the polyurethane polymer, the acrylic polymer, and the crosslinking component. The acrylic polymer is prepared according to usual methods, such as by bulk or solution polymerization followed by dispersion in an aqueous medium or, preferably, by emulsion polymerization in an aqueous medium. The acrylic polymer is polymerized from a monomer mixture that preferably includes an active hydrogen-functional monomer and preferably includes an acid-functional monomer. Examples of active hydrogen-functional monomers include, without limitation, hydroxyl-functional monomers such as hydroxyethyl acrylate, hydroxyethyl methacrylate, hydroxypropyl acrylate, hydroxypropyl methacrylate, hydroxybutyl acrylates, and hydroxybutyl methacrylates; and carbamate- and urea-functional monomers or monomers with functional groups that are converted to carbamate or urea groups after polymerization. Preferably, a sufficient amount of active hydrogen-functional monomer is included to produce an equivalent weight of 1000 or less grams per equivalent, more preferably 800 or less grams per equivalent, and even more preferably 600 or less grams per equivalent.

It is preferred that the acrylic polymer is dispersed as an anionic dispersion. Examples of suitable acid-functional monomers include, without limitation, α,β-ethylenically unsaturated monocarboxylic acids containing 3 to 5 carbon atoms, α,β-ethylenically unsaturated dicarboxylic acids containing 4 to 6 carbon atoms and the anhydrides and monoesters of these. Examples include, without limitation, acrylic acid, methacrylic acid, crotonic acid, maleic acid or maleic anhydride, itaconic acid or itaconic anhydride, and so on. A sufficient amount of acid-functional monomer is included to produce an acrylic polymer with an acid number of at least about 1, and preferably the acrylic polymer has an acid number of from about 1 to about 10.

In addition to the ethylenically unsaturated monomer having acid functionality or used to generate acid functionality in the finished polymer, one or more other ethylenically unsaturated monomers are employed as comonomers in forming the acrylic resins of the invention. Examples of such copolymerizable monomers include, without limitation, derivatives of α,β-ethylenically unsaturated monocarboxylic acids containing 3 to 5 carbon atoms, including esters, nitriles, or amides of those acids; diesters of α,β-ethylenically unsaturated dicarboxylic acids containing 4 to 6 carbon atoms; vinyl esters, vinyl ethers, vinyl ketones, vinyl amides, and aromatic or heterocyclic aliphatic vinyl compounds. Representative examples of acrylic and methacrylic acids, amides and aminoalkyl amides include, without limitation, such compounds as acrylamide, N-(1,1-dimethyl-3-oxobutyl)-acrylamide, N-alkoxy amides such as methylolamides; N-alkoxy acrylamides such as n-butoxy acrylamide; N-aminoalkyl acrylamides or methacrylamides such as aminomethylacrylamide, 1-aminoethyl-2-acrylamide, 1-aminopropyl-2-acrylamide, 1-aminopropyl-2-methacrylamide, N-1-(N-butylamino)propyl-(3)-acrylamide and 1-aminohexyl-(6)-acrylamide and 1-(N,N-dimethylamino)-ethyl-(2)-methacrylamide, 1-(N,N,-dimethylamino)-propyl-(3)-acrylamide and 1-(N, N-dimethylamino)-hexyl-(6)-methacrylamide.

Representative examples of esters of acrylic, methacrylic, and crotonic acids include, without limitation, those esters from reaction with saturated aliphatic and cycloaliphatic alcohols containing 1 to 20 carbon atoms, such as methyl, ethyl, propyl, isopropyl, n-butyl, isobutyl, tert-butyl, 2-ethylhexyl, lauryl, stearyl, cyclohexyl, trimethylcyclohexyl, tetrahydrofurfuryl, stearyl, sulfoethyl, and isobomyl acrylates, methacrylates, and crotonates; and polyalkylene glycol acrylates and methacrylates.

Representative examples of other ethylenically unsaturated polymerizable monomers include, without limitation, such compounds as fumaric, maleic, and itaconic anhydrides, monoesters, and diesters. Polyfunctional monomers may also be included to provide a partially crosslinked acrylic dispersion. Examples of polyfunctional compounds include, without limitation, ethylene glycol diacrylate, ethylene glycol dimethacrylate, triethylene glycol diacrylate, tetraethylene glycol dimethacrylate, 1,6-hexanediol diacrylate, divinylbenzene, trimethylolpropane triacrylate, and so on.

Representative examples of vinyl monomers that can be copolymerized include, without limitation, such compounds as vinyl acetate, vinyl propionate, vinyl ethers such as vinyl ethyl ether, vinyl and vinylidene halides, and vinyl ethyl ketone. Representative examples of aromatic or heterocyclic aliphatic vinyl compounds include, without limitation, such compounds as styrene, α-methyl styrene, vinyl toluene, tert-butyl styrene, and 2-vinyl pyrrolidone.

After polymerization, the acid functionality is salted, preferably with an alkali or base, preferably an amine, even more preferably a tertiary amine. Example of suitable salting materials include, without limitation, ammonia, monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine propylenediamine, ethylethanolamine, dimethylethanolamine, diethylethanolamine, 2-amino-2-methylpropanol, and morpholine. Preferred salting materials include 2-amino-2-methylpropanol and dimethylethanolamine.

The acrylic polymers may be prepared as solutions in an organic solvent medium, preferably selected from water-soluble or water-miscible organic solvents, and then dispersed into water. After dispersion into water, the organic solvent can be distilled from the aqueous dispersion or emulsion.

In a preferred method, the acrylic polymer is provided by emulsion polymerization. Preferably, a nonionic or an anionic surfactant is used for the emulsion polymerization. Suitable surfactants include, without limitation, polyoxyethylenenonylphenyl ethers, polyoxyethylenealkylallyl ether sulfuric acid esters, amino and alkali salts of dodecylbenzenesulfonic acid such as the dimethylethanolamine salt of dodecylbenzenesulfonic acid and sodium dodecylbenzenesulfonic acid, and sodium dioctylsulfosuccinate.

The polymerization may be carried out by free radical polymenzation. The free radical source is typically supplied by a redox initiator or by an organic peroxide or azo compound. Useful initiators include, without limitation, ammonium peroxydisulfate, potassium peroxydisulfate, sodium metabisulfite, hydrogen peroxide, t-butyl hydroperoxide, dilauryl peroxide, t-butyl peroxybenzoate, 2,2'-azobis(isobutyronitrile), and redox initiators such as ammonium peroxydisulfate and sodium metabisulfite with ferrous ammonium sulfate. Optionally, a chain transfer agent may be used. Typical chain transfer agents include mercaptans such as octyl mercaptan, n- or tert-dodecyl mercaptan, thiosalicylic acid, mercaptoacetic acid, and mercaptoethanol; halogenated compounds; and dimeric alpha-methyl styrene.

Acrylic polymers prepared by emulsion polymerization can have weight average molecular weights of one million or more. The weight average molecular weight of the acrylic dispersion is preferably from about 5,000 to about 5,000,000, more preferably from about 10,000 to about 1,000,000 and even more preferably from about 100,000 to about 500,000. If prepared by solution polymerization and then dispersed in water, the acrylic polymer will generally have a number average molecular weight of from about 5000 to about 60,000. The molecular weight can be determined by gel permeation chromatography using a polystyrene standard or other known methods.

The theoretical glass transition temperature of the acrylic polymer can be adjusted according to methods well-known in the art through selection and apportionment of the comonomers. The acrylic polymer has a glass transition temperature that is at least about 20°C higher than the glass transition temperature of polyurethane resin. Preferably, the acrylic polymer has a glass transition temperature that is at least about 40°C higher, more preferably about 50°C higher, than the glass transition temperature of polyurethane resin. In a preferred embodiment, the theoretical Tg of the acrylic polymer is between about -30°C and 80°C, more preferably between about -20°C and 40°C.

The polyurethane polymer may be included in the basecoat coating composition in an amount of at least about 40% by weight, preferably at least about 50% by weight, based on the combined nonvolatile weights of the polyurethane polymer and the acrylic polymer. The polyurethane polymer may be included in the basecoat composition in an amount of up to about 98% by weight, preferably up to about 80% by weight, based on the combined nonvolatile weights of the polyurethane polymer and the acrylic polymer. It is preferred to include from about 50% by weight to about 75% by weight, and even more preferred to include from about 65% by weight to about 75% by weight, of the polyurethane polymer, based on the combined nonvolatile weights of the polyurethane polymer and the acrylic polymer.

The basecoat coating compositions of the present invention also include a crosslinker component. The crosslinker component includes one or more crosslinkers reactive with active hydrogen functionality. Examples of crosslinkers reactive with active hydrogen functionality include, without limitation, materials having active methylol or methylalkoxy groups, including aminoplast resins or phenol/formaldehyde adducts; blocked polyisocyanate curing agents; tris(alkoxy carbonylamino) triazines (available from Cytec Industries under the tradename TACT); and combinations thereof. Suitable aminoplast resins are amine/aldehyde condensates, preferably at least partially etherified, and most preferably fully etherified. Melamine and urea are preferred amines, but other triazines, triazoles, diazines, guanidines, or guanamines may also be used to prepare the alkylated amine/aldehyde aminoplast resins crosslinking agents. The aminoplast resins are preferably amine/formaldehyde condensates, although other aldehydes, such as acetaldehyde, crotonaldehyde, and benzaldehyde, may be used. Non-limiting examples of preferred aminoplast resins include monomeric or polymeric melamine formaldehyde resins, including melamine resins that are partially or fully alkylated using alcohols that preferably have one to six, more preferably one to four, carbon atoms, such as hexamethoxy methylated melamine; urea-formaldehyde resins including methylol ureas and siloxy ureas such as butylated urea formaldehyde resin, alkylated benzoguanimines, guanyl ureas, guanidines, biguanidines, polyguanidines, and the like. Monomeric melamine formaldehyde resins are particularly preferred. The preferred alkylated melamine formaldehyde resins are water miscible or water soluble. Examples of blocked polyisocyanates include isocyanurates of toluene diisocyanate, isophorone diisocyanate, and hexamethylene diisocyanate blocked with a blocking agent such as an alcohol, an oxime, or a secondary amine such as pyrazole or substituted pyrazole.

The crosslinker component preferably is from about 2% by weight to about 30% by weight, and more preferably from about 5% by weight to about 20% by weight, and particularly preferably about 5% to about 15% by weight of the combined nonvolatile weights of the polyurethane, the acrylic polymer, and the crosslinking component.

The basecoat coating compositions may include one or more catalysts. The type of catalyst depends upon the particular crosslinker component composition utilized. Useful catalysts include, without limitation, blocked acid catalysts, such as para-toluene sulfonic acid, dodecylbenzene sulfonic acid, and dinonylnaphthylene disulfonic acid blocked with amines; phenyl acid phosphate, monobutyl maleate, and butyl phosphate, hydroxy phosphate ester; Lewis acids, zinc salts, and tin salts, including dibutyl tin dilaurate and dibutyl tin oxide.

The basecoat coating compositions according to the invention further include a pigment that may be selected from any organic or inorganic compounds or colored materials, fillers, metallic or other inorganic flake materials such as pearlescent mica flake pigments or metallic flake pigments such as aluminum flake. Examples of suitable classes of organic pigments that may be used include, without limitation, metallized and non-metallized azo pigments, azomethine pigments, methine pigments, anthraquinone pigments, phthalocyanine pigments, perinone pigments, perylene pigments, diketopyrrolopyrrole pigments, thioindigo pigments, iminoisoindoline pigments, iminoisoindolinone pigments, quinacridone pigments such as quinacridone reds and violets, flavanthrone pigments, indanthrone pigments, anthrapyrimidine pigments, carbazole pigments, monoarylide and diarylide yellows, benzimidazolone yellows, tolyl orange, naphthol orange, and quinophthalone pigments. Examples of suitable inorganic pigments include, without limitation, metal oxide pigments such as titanium dioxide, iron oxides including red iron oxide, black iron oxide, and brown iron oxide, and chromium oxide green; carbon black; ferric ferrocyanide (Prussian blue); ultramarine; lead chromate; and so on.

The color pigment or pigments and any fillers are preferably dispersed in the polyurethane dispersion according to known methods. In general, dry pigment and the polyurethane dispersion are brought into contact under a shear high enough to break the pigment agglomerates down to the primary pigment particles and to wet the surface of the pigment particles. Additional dispersing aids may be included. The breaking of the agglomerates and wetting of the primary pigment particles are important for pigment stability and color development. The pigment dispersions are combined in the basecoat composition.

Metallic basecoat colors are produced using one or more special flake pigments. Metallic colors are generally defined as colors having gonioapparent effects. For example, the American Society of Testing Methods (ASTM) document F284 defines metallic as "pertaining to the appearance of a gonioapparent material containing metal flake." Metallic basecoat colors may be produced using metallic flake pigments like aluminum flake pigments, copper flake pigments, zinc flake pigments, stainless steel flake pigments, and bronze flake pigments and/or using pearlescent flake pigments including treated micas like titanium dioxide-coated mica pigments and iron oxide-coated mica pigments to give the coatings a different appearance when viewed at different angles. Unlike the solid color pigments, the flake pigments do not agglomerate and are not ground under high shear because high shear would break or bend the flakes or their crystalline morphology, diminishing or destroying the gonioapparent effects. The flake pigments are satisfactorily dispersed, preferably with any of the basecoat composition resins or polymers such as the polyurethane, acrylic polymer, or crosslinker, by stirring under low shear. One or more color pigments dispersed as described may be included in the metallic basecoat composition to provide a metallic color basecoat composition.

The basecoat composition has a pigment to binder ratio of at least about 0.5 by weight. The total weight of pigment used to determine the ratio includes any color pigments, flake pigments, and filler pigments in the composition.

Other conventional materials, such as dyes, flow control or rheology control agents, and so on may be added to the compositions.

The basecoat coating composition has a very low content of volatile of organic solvent. The polyurethane dispersion is preferably prepared as a solvent free or substantially solvent free dispersion. By "substantially solvent free" it is meant that the dispersion has a volatile organic content of less than about 5% by weight of the basecoat composition. The acrylic dispersion is also preferably solvent free or substantially solvent free dispersion. The basecoat composition preferably has a volatile organic content of less than about 1.5, more preferably less than about 1.3, and even more preferably less than about 0.7. The volatile organic content of a coating composition is typically measured using ASTM D3960.

The coating compositions of the present invention are applied as basecoats on automotive articles, such as metal or plastic automotive bodies or elastomeric fascia. It is preferred to have a layer of a primer surfacer before application of the basecoat coating composition of the invention. A clearcoat composition is preferably applied over the basecoat composition.

The composite coating of the invention has, as one layer, a basecoat coating layer that is obtained from the aqueous basecoat composition of the invention. The composite coating has a clearcoat layer applied over the basecoat coating layer. In a preferred embodiment, the composite coating has a third, underlying layer that is obtained by applying and curing an aqueous primer composition comprising a dispersed polyurethane polymer having a glass transition temperature of about 0°C or less; a dispersed acrylic polymer having a glass transition temperature that is at least about 20°C higher than the glass transition temperature of the polyurethane polymer; and a crosslinking component that is reactive with at least one of the polyurethane polymer and the acrylic polymer.

The polyurethane polymer of the primer composition has a glass transition temperature preferably about -20°C or less, and more preferably about -30°C or less. The glass transition temperature of the polyurethane of the primer composition is preferably in the range of from about -80°C to about 0°C, more preferably from about -65°C to about - 10°C, still more preferably from about -65°C to about -30°C, and even still more preferably from about -60°C to about -35°C. The weight average molecular weight of the polyurethane of the primer composition is preferably from about 15,000 to about 60,000, more preferably from about 20,000 to about 35,000.

The weight average molecular weight of the acrylic dispersion of the primer composition is preferably from about 5,000 to about 5,000,000, more preferably from about 10,000 to about 1,000,000 and even more preferably from about 100,000 to about 500,000. Preferably, the acrylic polymer of the primer composition has a glass transition temperature that is at least about 40°C higher, more preferably about 50°C higher, than the glass transition temperature of polyurethane resin. In a preferred embodiment, the theoretical Tg of the acrylic polymer is between about -30°C and 80°C, more preferably between about -20°C and 40°C.

The polyurethane polymer may be included in the primer in an amount of at least about 40% by weight, preferably at least about 50% by weight, based on the combined nonvolatile weights of the polyurethane polymer and the acrylic polymer. The polyurethane polymer may be included in the primer in an amount of up to about 98% by weight, preferably up to about 80% by weight, based on the combined nonvolatile weights of the polyurethane polymer and the acrylic polymer. It is preferred to include from about 50% by weight to about 75% by weight, and even more preferred to include from about 65% by weight to about 75% by weight, of the polyurethane polymer, based on the combined nonvolatile weights of the polyurethane polymer and the acrylic polymer. The crosslinker component preferably is from about 2% by weight to about 30% by weight, and more preferably from about 5% by weight to about 20% by weight, and particularly preferably about 5% to about 15% by weight of the combined nonvolatile weights of the polyurethane, the acrylic polymer, and the crosslinking component of the primer composition.

Crosslinking compositions are preferred for forming the clearcoat layer. Coatings of this type are well-known in the art and include waterbome compositions as well as solventborne compositions. For example, the clearcoat according to U.S. Pat. No. 5,474,811 may be applied wet-on-wet over a layer of the basecoat composition. Polymers known in the art to be useful in clearcoat compositions include, without limitation, acrylics, vinyl, polyurethanes, polycarbonates, polyesters, alkyds, and polysiloxanes. Acrylics and polyurethanes are preferred. Thermoset clearcoat compositions are also preferred, and, to that end, preferred polymers comprise one or more kinds of crosslinkable functional groups, such as carbamate, hydroxy, isocyanate, amine, epoxy, acrylate, vinyl, silane, acetoacetate, and so on. The polymer may be self-crosslinking, or, preferably, the composition may include a crosslinking agent such as a polyisocyanate or an aminoplast resin of the kind described above. In one embodiment, waterbome clearcoat compositions having low volatile organic content are used. The waterborne clearcoat compositions preferably has a volatile organic content of less than about 1.5, more preferably less than about 1.3, and even more preferably less than about 0.7.

Each layer of the composite coatings of the invention can be applied to an article to be coated according to any of a number of techniques well-known in the art. These include, for example, spray coating, dip coating, roll coating, curtain coating, and the like. If an initial electrocoat primer layer is applied to a metallic substrate, the electrocoat primer is applied by electrodeposition. For automotive applications, the primer surfacer coating composition, basecoat composition of the invention, and the clearcoat composition layers are preferably applied by spray coating, particularly electrostatic spray methods. Coating layers of one mil or more are usually applied in two or more coats, separated by a time sufficient to allow some of the solvent or aqueous medium to evaporate, or "flash," from the applied layer. The flash may be at ambient or elevated temperatures, for example, the flash may use radiant heat. The coats as applied can be from 0.5 mil up to 3 mils dry, and a sufficient number of coats are applied to yield the desired final coating thickness.

Basecoat-clearcoat topcoats are usually applied wet-on-wet. The compositions are applied in coats separated by a flash, as described above, with a flash also between the last coat of the basecoat composition and the first coat the clearcoat composition. The two coating layers are then cured simultaneously. Preferably, the cured basecoat layer is 0.5 to 1.5 mils thick, preferably a thickness at least to hiding, and the cured clear coat layer is 1 to 3 mils, more preferably 1.6 to 2.2 mils, thick.

The coating compositions described are preferably cured with heat. Curing temperatures are preferably from about 70°C to about 180°C, and particularly preferably from about 170°F to about 200°F for a composition including an unblocked acid catalyst, or from about 240°F to about 275°F for a composition including a blocked acid catalyst. Typical curing times at these temperatures range from 15 to 60 minutes, and preferably the temperature is chosen to allow a cure time of from about 15 to about 30 minutes. In a preferred embodiment, the coated article is an automotive body or part.

The invention is further described in the following examples. The examples are merely illustrative and do not in any way limit the scope of the invention as described and claimed.

### Examples

### Example 1. Straight-Shade Basecoat Coating Composition

A basecoat coating composition was prepared by first mixing together 10.95 parts by weight of BAYHYDROL 140 AQ polyurethane dispersion (about 40% nonvolatile, 59% water, and 1% toluene, glass transition temperature of about -45°C, pH of about 6.0 to about 7.5, weight average molecular weight of about 25,000, anionic Desmodur W/1,6-hexamethylene diisocyanate/polyester polyol-based polyurethane, available from Bayer Corporation, Pittsburgh, PA), 14.13 parts by weight of an acrylic polymer emulsion (glass transition temperature of 20 °C., nonvolatile content of about 41% in water, acid number of about 8 mg KOH/g nonvolatile, hydroxyl equivalent weight of 510, salted with 2-amino-2-methylpropanol to a pH of about 6 to 7), 22.66 parts deionized water, 40.89 parts by weight of a previously prepared polyurethane-based pigment paste (63% by weight nonvolatile in water, the nonvolatile composition being 27% by weight of BAYHYDROL 140 AQ polyurethane resin, 6.8% by weight of hexamethoxy methylated melamine formaldehyde resin, 33.1% by weight of titanium dioxide, 33.1% by weight of barium sulfate extender, ground on a horizontal mill to a fineness of 6 microns), and 9.67 parts of a blue pigment paste (35.5% by weight nonvolatile in water, nonvolatile composition being 24% by weight of an acrylic grind resin, 76% by weight of blue copper phthalocyanine pigment, ground on a horizontal mill to a fineness of 7+ microns). To this mixture was added 0.27 parts by weight of ABEX EP 110 (anionic surfactant available from Rhodia) and a total of 1.39 parts by weight of an additive package (defoamer, wetting agent, and rheology control agent). Finally, the pH of the basecoat composition was adjusted to about 8.0 with 2-amino-2-methylpropanol.

The volatile organic content of the basecoat composition was 0.12 pounds per gallon. The basecoat composition had a nonvolatile content of 40.9% by weight and a viscosity of 75 centipoise measured at 385 s⁻¹.

This basecoat composition was applied to a primed steel panel. A layer of an aqueous clear coat composition was applied over the basecoat layer and the two layers were cured together for 30 minutes at 250°F. The coating produced had a smooth, even basecoat appearance.

### Example 2. Straight-Shade Basecoat Coating Composition

A basecoat coating composition was produced according to Example 1, except that the polyurethane-based pigment paste of Example 1 was replaced with a second polyurethane-based pigment paste that was 63% by weight nonvolatile in water, the nonvolatile composition being 27% by weight of BAYHYDROL 140 AQ polyurethane resin, 6.8% by weight of hexamethoxy methylated melamine formaldehyde resin, 66.2% by weight of barium sulfate extender, ground on a horizontal mill to a fineness of 6 microns. The basecoat composition was applied to a primed steel panel, overcoated with the aqueous clear coat composition, and cured as before. The coating produced again had a smooth, even basecoat appearance, but the blue color was more intense than the coating of Example 1.

### Comparative Example A. Straight-Shade Basecoat Coating Composition

A basecoat coating composition was produced according to Example 1, except that the polyurethane-based pigment paste of Example 1 was replaced with a third polyurethane-based pigment paste that was 42% by weight nonvolatile in water, the nonvolatile composition being 40% by weight of BAYHYDROL 140 AQ polyurethane resin, 10% by weight of hexamethoxy methylated melamine formaldehyde resin, 50% by weight of barium sulfate extender, ground on a horizontal mill to a fineness of 6 microns. The pigment to binder ratio of the basecoat was less than 0.5. The basecoat composition was applied to a primed steel panel, overcoated with the aqueous clear coat composition, and cured as before. The coating produced had a more intense blue color than Example 1, but the basecoat film had a poor appearance, being pinholed and poorly coalesced.

### Comparative Example B. Metallic Basecoat Coating Composition

A silver metallic basecoat coating composition was prepared by mixing together a 325 parts by weight portion of a previously made mixture of coating components [88 parts by weight of the emulsion acrylic polymer of Example1, 222 parts by weight of BAYHYDROL 140 AQ polyurethane dispersion, and 13.6 parts by weight hexamethoxy methylated melamine blended with 1.4 parts by weight ABEX EP 110] with a mixture of 17 parts by weight of an aluminum flake pigment (65% by weight nonvolatile in odorless mineral spirits) and 27 parts by weight of propylene glycol monomethyl ether. A portion of 2.6 parts by weight of a rheology control agent was added, and the viscosity was adjusted with addition of 81 parts deionized water.

The volatile organic content of the basecoat composition was 2.24 pounds per gallon. The basecoat composition had a nonvolatile content of 33.5% by weight and a viscosity of 70 centipoise. The pigment to binder ratio was 0.08.

This basecoat composition was applied to primed steel panel. A layer of an aqueous clear coat composition was applied over the basecoat layer and the two layers were cured together for 30 minutes at 250°F. The appearance was unacceptable due to pinholing, poor coalescence, and poor metal control.

### Example 3. Metallic Basecoat Coating Composition

Comparative Example B was repeated, but with addition of barium sulfate extender pigment to increase the pigment to binder ratio.

The composition was prepared by mixing together a 260 g portion of a premixture of coating components [88 parts by weight of the emulsion acrylic polymer of Example1, 163 parts by weight of BAYHYDROL 140 AQ polyurethane dispersion, and 7.6 parts hexamethoxy methylated melamine blended with .8 parts ABEX EP 110] with a mixture of 17 parts by weight of an aluminum flake pigment (65% by weight nonvolatile in odorless mineral spirits), 27 parts by weight of propylene glycol monomethyl ether, and 138 parts by weight of the polyurethane-based barium sulfate paste of Example 2. A portion of 2.6 parts by weight of a rheology control agent was added, and the viscosity was adjusted with addition of 60 parts deionized water.

The basecoat composition was applied to primed steel panel and coated with a layer of an aqueous clear coat composition, and the two layers were cured together for 30 minutes at 250°F as before. The appearance was good, with a smooth basecoat appearance and good metal control.

The invention has been described in detail with reference to preferred embodiments thereof. It should be understood, however, that variations and modifications can be made within the spirit and scope of the invention.

## Claims

1. An aqueous basecoat coating composition, comprising:
(a) a dispersed polyurethane polymer, said polyurethane polymer having a glass transition temperature of 0°C or less;
(b) a dispersed acrylic polymer, said acrylic polymer having a glass transition temperature that is at least 20°C higher than the glass transition temperature of said polyurethane polymer;
(c) a crosslinking component that is reactive with at least one of the polyurethane polymer and the acrylic polymer; and
(d) a pigment,
wherein the nonvolatile weight of the polyurethane polymer is from 10% to 50% by weight of the combined nonvolatile weights of the polyurethane polymer, the acrylic polymer and the crosslinking component, and
further wherein the basecoat composition has a pigment to binder ratio of at least 0.5.

2. An aqueous basecoat coating composition according to claim 1, wherein the polyurethane polymer has a glass transition temperature of -80°C to 0°C.

3. An aqueous basecoat coating composition according to claim 1 or 2, wherein the polyurethane polymer has a weight average molecular weight from 15,000 to 60,000.

4. An aqueous basecoat coating composition according to any one of the claims 1 to 3, wherein the polyurethane polymer is prepared by reaction of at least one α,ω-alkylene diisocyanate having four or more carbons.

5. An aqueous basecoat coating composition according to any one of the claims 1 to 4, wherein the polyurethane polymer is prepared by reaction of at least one polyester polyol.

6. An aqueous basecoat coating composition according to any one of the claims 1 to 5, wherein the polyurethane polymer is prepared by reaction of a polyester diol that is the reaction product of a mixture comprising neopentyl glycol and adipic acid.

7. An aqueous basecoat coating composition according to any one of the claims 1 to 6, wherein the polyurethane polymer is anionic.

8. An aqueous basecoat coating composition according to any one of the claims 1 to 7, wherein the nonvolatile weight of the acrylic polymer is from 25% to 75% by weight of the combined nonvolatile weights of the polyurethane polymer, the acrylic polymer and the crosslinking component.

9. An aqueous basecoat coating composition according to any one of the claims 1 to 8, wherein the acrylic polymer has an active hydrogen functionality equivalent weight of 1000 or less.

10. An aqueous basecoat coating composition according to any one of the claims 1 to 9, wherein the acrylic polymer is anionic.

11. An aqueous basecoat coating composition according to any one of the claims 1 to 10, wherein the acrylic polymer has an acid number from 1 to about 10 mg KOH/g.

12. An aqueous basecoat coating composition according to any one of the claims 1 to 12, further comprising a member selected from the group consisting of 2-amino-2-methylpropanol and dimethylethanolamine.

13. An aqueous basecoat coating composition according to any one of the claims 1 to 12, wherein the acrylic polymer has a glass transition temperature from -30°C to 80°C.

14. An aqueous basecoat coating composition according to any one of the claims 1 to 13, wherein the basecoat has a volatile organic content of less than 0.7 pounds per gallon.

15. A composite coating, comprising a basecoat layer and a clearcoat layer over the basecoat layer, wherein the basecoat layer is obtained by applying a layer of an aqueous basecoat coating composition according to any one of the claims 1 to 14.

16. A composite coating according to claim 15, wherein the basecoat layer is applied over a primer layer that is obtained by applying and curing an aqueous primer composition comprising:
(a) a dispersed polyurethane polymer, said polyurethane polymer having a glass transition temperature of 0°C or less;
(b) a dispersed acrylic polymer, said acrylic polymer having a glass transition temperature that is at least 20°C higher than the glass transition temperature of said polyurethane polymer; and
(c) a crosslinking component that is reactive with at least one of the polyurethane polymer and the acrylic polymer.

17. A composite coating according to claim 16, wherein the polyurethane polymer of the primer composition has a glass transition temperature from -80°C to 0°C.

18. A composite coating according to 16 or 17, wherein the polyurethane polymer of the primer composition has a weight average molecular weight from 15,000 to 60,000.

19. A composite coating according to any one of the claims 16 to 18, wherein the acrylic polymer of the primer composition has a glass transition temperature from -30°C to 80°C.

## Patentansprüche

1. Wäßrige Basislackzusammensetzung, enthaltend:
(a) ein dispergiertes Polyurethanpolymer mit einer Glasübergangstemperatur von 0°C oder weniger;
(b) ein dispergiertes Acrylpolymer mit einer Glasübergangstemperatur, die mindestens 20°C über der Glasübergangstemperatur des Polyurethanpolymers liegt;
(c) eine Vernetzungskomponente, die gegenüber dem Polyurethanpolymer und/oder dem Acrylpolymer reaktiv ist; und
(d) ein Pigment,
bei der das Festkörpergewicht des Polyurethanpolymers 10 bis 50 Gew.-%, bezogen auf das kombinierte Festkörpergewicht des Polyurethanpolymers, des Acrylpolymers und der Vernetzungskomponente, betragt und
ferner die Basislackzusammensetzung ein Pigment-Bindemittel-Verhältnis von mindestens 0,5 aufweist.

2. Wäßrige Basislackzusammensetzung nach Anspruch 1, bei der das Polyurethanpolymer eine Glasubergangstemperatur von -80°C bis 0°C aufweist.

3. Wäßrige Basislackzusammensetzung nach Anspruch 1 oder 2, bei der das Polyurethanpolymer ein gewichtsmittleres Molekulargewicht von 15.000 bis 60.000 aufweist.

4. Wäßrige Basislackzusammensetzung nach einem der Ansprüche 1 bis 3, bei der das Polyurethanpolymer durch Umsetzung mindestens eines α,ω-Alkylendiisocyanats mit vier oder mehr Kohlenstoffatomen hergestellt wird.

5. Wäßrige Basislackzusammensetzung nach einem der Ansprüche 1 bis 4, bei der das Polyurethanpolymer durch Umsetzung mindestens eines Polyesterpolyols hergestellt wird.

6. Wäßrige Basislackzusammensetzung nach einem der Anspruche 1 bis 5, bei der das Polyurethanpolymer durch Umsetzung eines Polyesterdiols, bei dem es sich um das Umsetzungsprodukt eines Neopentylglykol und Adipinsäure enthaltenden Gemischs handelt, hergestellt wird.

7. Wäßrige Basislackzusammensetzung nach einem der Anspruche 1 bis 6, bei der das Polyurethanpolymer anionisch ist.

8. Wäßrige Basislackzusammensetzung nach einem der Ansprüche 1 bis 7, bei der das Festkörpergewicht des Acrylpolymers 25 bis 75 Gew.-%, bezogen auf das kombinierte Festkörpergewicht des Polyurethanpolymers, des Acrylpolymers und der Vernetzungskomponente, beträgt.

9. Wäßrige Basislackzusammensetzung nach einem der Anspruche 1 bis 8, bei der das Acrylpolymer ein Äquivalentgewicht in bezug auf aktiven Wasserstoff enthaltende Funktionalitat von höchstens 1000 aufweist.

10. Wäßrige Basislackzusammensetzung nach einem der Ansprüche 1 bis 9, bei der das Acrylpolymer anionisch ist.

11. Wäßrige Basislackzusammensetzung nach einem der Anspruche 1 bis 10, bei der das Acrylpolymer eine Saurezahl von 1 bis 10 mg KOH/g aufweist.

12. Wäßrige Basislackzusammensetzung nach einem der Ansprüche 1 bis 12, ferner enthaltend ein Mitglied der Gruppe bestehend aus 2-Amino-2-methylpropanol und Dimethylethanolamin.

13. Wäßrige Basislackzusammensetzung nach einem der Anspruche 1 bis 12, bei der das Acrylpolymer eine Glasübergangstemperatur von -30°C bis 80°C aufweist.

14. Wäßrige Basislackzusammensetzung nach einem der Anspruche 1 bis 13, bei der der Basislack einen Gehalt an leichtfluchtigen organischen Verbindungen von weniger als 0,7 Pounds pro Gallone aufweist.

15. Verbundbeschichtung, enthaltend eine Basislackschicht und eine darüber aufgebrachte Klarlackschicht, bei der die Basislackschicht durch Aufbringen einer Schicht einer wäßrigen Basislackzusammensetzung gemäß einem der Ansprüche 1 bis 14 erhältlich ist.

16. Verbundbeschichtung nach Anspruch 15, bei der die Basislackschicht über einer Grundierungsschicht, welche durch Aufbringen und Härten einer wäßrigen Grundierungszusammensetzung, enthaltend:
(a) ein dispergiertes Polyurethanpolymer mit einer Glasübergangstemperatur von 0°C oder weniger;
(b) ein dispergiertes Acrylpolymer mit einer Glasübergangstemperatur, die mindestens 20°C über der Glasübergangstemperatur des Polyurethanpolymers liegt; und
(c) eine Vernetzungskomponente, die gegenüber dem Polyurethanpolymer und/oder dem Acrylpolymer reaktiv ist;
erhältlich ist, aufgetragen ist.

17. Verbundbeschichtung nach Anspruch 16, bei der das Polyurethanpolymer der Grundierungszusammensetzung eine Glasübergangstemperatur von -80°C bis 0°C aufweist.

18. Verbundbeschichtung nach Anspruch 16 oder 17, bei der das Polyurethanpolymer der Grundierungszusammensetzung ein gewichtsmittleres Molekulargewicht von 15.000 bis 60.000 aufweist.

19. Verbundbeschichtung nach einem der Ansprüche 16 bis 18, bei der das Acrylpolymer der Grundierungszusammensetzung eine Glasübergangstemperatur von -30°C bis 80°C aufweist.

## Revendications

1. Composition aqueuse de revêtement de couche de fond comprenant :
(a) un polymère de polyuréthanne dispersé, ledit polymère de polyuréthanne ayant une température de transition vitreuse de 0°C ou moins ;
(b) un polymère acrylique dispersé, ledit polymère acrylique ayant une température de transition vitreuse qui est au moins 20°C supérieure à la température de transition vitreuse dudit polymère de polyuréthanne ;
(c) un composant de réticulation qui réagit avec au moins un du polymère de polyuréthanne et du polymère acrylique ; et
(d) un pigment,
dans laquelle le poids de substances non volatiles du polymère de polyuréthanne est de 10% à 50% en poids des poids combinés des substances non volatiles du polymère de polyuréthanne, du polymère acrylique et du composant de réticulation, et
dans laquelle en outre la composition de couche de fond a un rapport du pigment au liant d'au moins 0,5.

2. Composition aqueuse de revêtement de couche de fond selon la revendication 1, dans laquelle le polymère de polyuréthanne a une température de transition vitreuse de -80°C à 0°C.

3. Composition aqueuse de revêtement de couche de fond selon la revendication 1 ou 2, dans laquelle le polymère de polyuréthanne a un poids moléculaire moyen en poids de 15 000 à 60 000.

4. Composition aqueuse de revêtement de couche de fond selon l'une quelconque des revendications 1 à 3, dans laquelle le polymère de polyuréthanne est préparé par réaction d'au moins un α,ω-alkylène diisocyanate ayant quatre carbones ou plus.

5. Composition aqueuse de revêtement de couche de fond selon l'une quelconque des revendications 1 à 4, dans laquelle le polymère de polyuréthanne est préparé par réaction d'au moins un polyester polyol.

6. Composition aqueuse de revêtement de couche de fond selon l'une quelconque des revendications 1 à 5, dans laquelle le polymère de polyuréthanne est préparé par réaction d'un polyester diol qui est le produit de la réaction d'un mélange comprenant du néopentylglycol et de l'acide adipique.

7. Composition aqueuse de revêtement de couche de fond selon l'une quelconque des revendications 1 à 6, dans laquelle le polymère de polyuréthanne est anionique.

8. Composition aqueuse de revêtement de couche de fond selon l'une quelconque des revendications 1 à 7, dans laquelle le poids des substances non volatiles du polymère acrylique est de 25% à 75% en poids des poids combinés des substances non volatiles du polymère de polyuréthanne, du polymère acrylique et du composant de réticulation.

9. Composition aqueuse de revêtement de couche de fond selon l'une quelconque des revendications 1 à 8, dans laquelle le polymère acrylique a un poids équivalent de fonctionnalité active d'hydrogène de 1000 ou moins.

10. Composition aqueuse de revêtement de couche de fond selon l'une quelconque des revendications 1 à 9, dans laquelle le polymère acrylique est anionique.

11. Composition aqueuse de revêtement de couche de fond selon l'une quelconque des revendications 1 à 10, dans laquelle le polymère, acrylique a un indice d'acidité de 1 à 10 mg de KOH/g.

12. Composition aqueuse de revêtement de couche de fond selon l'une quelconque des revendications 1 à 12, comprenant en outre un membre choisi parmi le groupe constitué du 2-amino-2-méthylpropanol et de la diméthyléthanolamine.

13. Composition aqueuse de revêtement de couche de fond selon l'une quelconque des revendications 1 à 12, dans laquelle le polymère acrylique a une température de transition vitreuse de -30°C à 80°C.

14. Composition aqueuse de revêtement de couche de fond selon l'une quelconque des revendications 1 à 13, dans laquelle la couche de fond a une teneur en substances organiques volatiles de moins de 83,88 grammes par litre (0,7 livre par gallon).

15. Revêtement composite, comprenant une couche de fond et une couche transparente sur la couche de fond, dans lequel la couche de fond est obtenue en appliquant une couche d'une composition aqueuse de revêtement de couche de fond selon l'une quelconque des revendications 1 à 14.

16. Revêtement composite selon la revendication 15, dans lequel la couche de fond est appliquée sur une couche primaire qui est obtenue en appliquant et en durcissant une composition aqueuse de couche primaire comprenant :
(a) un polymère de polyuréthanne dispersé, ledit polymère de polyuréthanne ayant une température de transition vitreuse de 0°C ou moins ;
(b) un polymère acrylique dispersé, ledit polymère acrylique ayant une température de transition vitreuse qui est au moins 20°C supérieure à la température de transition vitreuse dudit polymère de polyuréthanne, et
(c) un composant de réticulation qui réagit avec au moins un du polymère de polyuréthanne et du polymère acrylique.

17. Revêtement composite selon la revendication 16, dans lequel le polymère de polyuréthanne de la composition de couche primaire a une température de transition vitreuse de -80°C à 0°C.

18. Revêtement composite selon la revendication 16 ou 17, dans lequel le polymère de polyuréthanne de la composition de couche primaire a un poids moléculaire moyen en poids de 15 000 à 60 000.

19. Revêtement composite selon l'une quelconque des revendications 16 à 18, dans lequel le polymère acrylique de la composition de couche primaire a une température de transition vitreuse de -30°C à 80°C.
